# EUROPÄISCHE PATENTSCHRIFT

(11) **EP 0 853 561 B1**
(45) Veröffentlichungstag und Bekanntmachung des Hinweises auf die Patenterteilung: **05.04.2000**
(21) Anmeldenummer: 96922897.2
(22) Anmeldetag: 02.07.1996
(51) Int. Cl.: B60S 1/38

(54) **WISCHBLATT FÜR EINE SCHEIBENWISCHVORRICHTUNG EINES FAHRZEUGES, INSBESONDERE EINES KRAFTFAHRZEUGES**
WIPER BLADE FOR THE WINDSCREEN WIPER DEVICE OF A VEHICLE, IN PARTICULAR A MOTOR VEHICLE
BALAI D'ESSUIE-GLACE POUR SYSTEME D'ESSUIE-GLACES DE VEHICULE, NOTAMMENT D'AUTOMOBILE

(30) Priorität: 02.10.1995 DE 19536745
(43) Veröffentlichungstag der Anmeldung: 22.07.1998
(73) Patentinhaber: ITT Automotive Europe GmbH, 60488 Frankfurt am Main (DE)
(72) Erfinder: SCHMID, Eckhardt, D-74336 Brackenheim (DE); SCHOLL, Wolfgang, D-74376 Gemmrigheim (DE); EGNER-WALTER, Bruno, D-74076 Heilbronn (DE)
(74) Vertreter: Dreiss, Fuhlendorf, Steimle & Becker
(86) Internationale Anmeldenummer: EP9602885
(87) Internationale Veröffentlichungsnummer: WO9712787

(56) Entgegenhaltungen:
- EP-A- 0 502 759
- EP-A- 0 519 826
- EP-A- 0 565 057
- DE-A- 3 532 535
- DE-U- 9 310 928
- GB-A- 2 030 447
- GB-A- 2 103 075
- GB-A- 2 145 928

## Beschreibung

Die Erfindung bezieht sich auf ein Wischblatt für eine Scheibenwischvorrichtung eines Fahrzeuges insbesondere eines Kraftfahrzeuges, mit den Merkmalen des Oberbegriffs des Anspruchs 1, siehe EP-A-0 502 759.

Ein ähnliches Wischblatt ist beispielsweise aus der DE 31 53 715 C2 bekannt. Bei diesem Wischblatt ist eine einteilige Windleitvorrichtung einstückig mit dem Hauptbügel des Traggestells gefertigt und erstreckt sich von der Unterkante der vorderen Seitenwand des Hauptbügels nach unten. Eine derartige Anordnung der Windleitvorrichtung hat sich zwischenzeitlich als nicht optimal hinsichtlich der durch den anströmenden Fahrtwind erzielbaren Erhöhung des Anpreßdruckes erwiesen. Außerdem ist die wirksame Fläche dieser Windleitvorrichtung relativ gering, da die Längserstreckung dieser Windleitvorrichtung nicht größer ist als die des Hauptbügels. Außerdem erweist sich bei längeren Wischblättern, und dabei insbesondere beim Wischen gekrümmter Scheibenoberflächen, die Druckverteilung bezogen auf die Länge des Wischgummis als ungünstig, weil der Druck und somit die Wischqualität in den Außenbereichen des Wischgummis geringer ist als im mittleren Bereich.

Ein ähnliches Wischblatt ist auch aus der DE 40 17 078 A1 bekannt. Bei diesem Wischblatt, das einen an einem gegliederten Traggestell geführten Wischgummi aufweist, ist eine separate Windleitvorrichtung aus Kunststoff an dem Hauptbügel des Traggestells befestigt. Diese einteilige Windleitvorrichtung ist länger als der Hauptbügel des Traggestells und erstreckt sich somit in Längsrichtung über einen Teil der untergeordneten Bügel. Diese Windleitvorrichtung ist strömungstechnisch besser geformt und besitzt eine größere wirksame Fläche, weshalb auch ein höherer Anpreßdruck erzielbar ist als mit dem Wischblatt gemäß DE 31 53 715 C2. Trotzdem tritt auch hier der Nachteil auf, daß durch die Befestigung der Windleitvorrichtung an dem Hauptbügel des Traggestells eine ungünstige Druckverteilung auf den Wischgummi derart erzielt wird, daß der Anpreßdruck in den Randbereichen des Wischgummis deutlich geringer ist als im mittleren Bereich. Dementsprechend ergibt sich auch eine unterschiedliche Wischqualität hinsichtlich dieser Bereiche des Wischgummis in dessen Längsrichtung. Beim Wischen von gewölbten Scheibenoberflächen ist außerdem zu verzeichnen, daß die Endbereiche der Windleitvorrichtung einen größeren Abstand zur Scheibe aufweisen als ihr mittlerer Bereich. Demzufolge entstehen an den Endbereichen der Windleitvorrichtung andere Strömungsverhältnisse als im mittleren Bereich, die sich, beispielsweise durch unerwünschte Wirbelbildung an den hinter der Windleitvorrichtung liegenden Teilen des Wischblattes, nachteilig auf die Wischqualität auswirken können.

Offensichtlich sind die Traggestelle der vorbekannten Wischblätter in herkömmlicher Weise aus Stahlblech gefertigt, wobei im ersten Fall die mit dem Hauptbügel verbundene Windleitvorrichtung ebenfalls aus Stahlblech und im zweiten Fall die am Hauptbügel des Traggestells befestigte Windleitvorrichtung aus Kunststoff besteht. Nachteilig hierbei ist einerseits das relativ hohe Gewicht der Wischblätter, andererseits sind die Formgestaltungsmöglichkeiten, insbesondere hinsichtlich einer strömungsgünstigen Form der Wischblätter, durch die verwendete Metallfertigungstechnologie stark eingeschränkt.

Aus der FR 2 630 069 A1 ist ein Wischblatt mit einer gegliederten Traggestellstruktur bekannt, bei welchem ein Windabweiser zur Verstärkung des Anpreßdruckes durch den anströmenden Fahrtwind von einem ersten Windabweiser, der einstückig an ein Verbindungsstück zum Verbinden von Wischblatt und Wischarm angeformt ist, und mindestens einem zweiten Windabweiser besteht, der so mit dem Traggestell verbunden ist, daß diese Windabweiser in Wischstellung des Scheibenwischers eine nahezu durchgängige Windabweisfläche bilden. Bei einem Wischblatt mit derartigen unabhängigen Windabweisern, wobei der erste Windabweiser dem Hauptbügel und ein oder mehrere zweite unabhängige Windabweiser untergeordneten Bügeln des Traggestells zugeordnet sind, ist eine bessere Verteilung der Anpreßkraft auf den Wischgummi erreichbar. Jedoch sind in der zitierten Druckschrift keine konkreten Angaben über die Art und den Ort der Verbindung der zweiten Windabweiser mit den untergeordneten Bügeln des Traggestells sowie über die Form dieser Windabweiser enthalten, so daß die erreichbaren Verbesserungen der Wischqualität gegenüber den eingangs zitierten Wischblättern gemäß DE 40 1 7078 A1 bzw. DE 31 53 715 C2 nicht einschätzbar sind. Als nachteilig wird jedoch eingeschätzt, daß der erste Windabweiser einstückig mit dem Verbindungsstück zwischen Wischarm und Wischblatt gefertigt ist. Dadurch wird einerseits die Montage des Wischblattes erschwert, andererseits wird die Festigkeit der Verbindung zwischen Wischarm und Wischblatt und der Verbindung zwischen Windabweiser und Wischblatt beeinträchtigt. Außerdem ist anzunehmen, daß, wenn das Traggestell bzw. der Hauptbügel des Traggestells aus Kunststoff gefertigt ist, aufgrund der mechanischen Eigenschaften hierfür verwendbarer Kunststoffarten die Stabilität bzw. Steifigkeit des Hauptbügels bzw. des gesamten Traggestells zu wünschen übrig läßt. Eine zu geringe mechanische Steifigkeit des Traggestells bzw. Hauptbügels wirkt sich nachteilig auf die Wischqualität des Wischblattes aus.

Aus der EP-A1-0 502 759 ist ein Wischblatt der eingangs genannten Art bekannt. Bei diesem Wischblatt ist an jeden Bügel ein Spoilerglied angeformt, so daß sich ein nahezu über die ganze Länge des Wischers sich herstreckender Windabeiser ergibt. Die Befestigung der Spoilerglieder ist aber noch verbesserungsbedürftig.

Aufgabe der Erfindung ist es, die Wischqualität eines mit einer Windleiteinrichtung zur Erhöhung des Anpreßdruckes des Wischgummis gegen die zu wischende Scheibe versehenen Wischblattes nach der EP-A-0 502 759 weiter zu verbessern und dabei einen möglichst einfachen und stabilen Aufbau des Wischblattes zu gewährleisten.

Erfindungsgemäß wird die Aufgabe durch ein Wischblatt mit den Merkmalen des Anspruchs 1 gelöst.

Dadurch, daß die Windleitvorrichtung im wesentlichen quer zu ihrer Längsrichtung in mehrere Glieder geteilt ist und jeweils eines dieser Glieder einstückig mit dem Hauptbügel bzw. mit einem anderen Bügel des Traggestells gefertigt ist, wird einerseits eine günstige Verteilung der durch die Windleitvorrichtung erzeugten Anpreßkraft über das Traggestell auf den Wischgummi erreicht, und andererseits wird durch die Einstückigkeit der einzelnen Glieder der Windleitvorrichtung mit jeweils einem Bügel des Traggestells eine einfache Montage des Wischblattes ermöglicht und ein einfacher Aufbau des Wischblattes gewährleistet. Außerdem wird die Festigkeit der Verbindung zwischen der Windleitvorrichtung und dem Traggestell sowie die Festigkeit der Verbindung zwischen dem Wischblatt und dem Wischarm nicht beeinträchtigt. Dieses ist wichtig, um eine gute und möglichst schwingungsfreie Führung des Wischgummis über die zu wischende Scheibe zu gewährleisten, wodurch einerseits die Wischqualität verbessert und andererseits das Entstehen störender Rattergeräusche beim Wischbetrieb vermieden werden.

Dadurch, daß die einzelnen Glieder der Windleitvorrichtung jeweils einstückig mit dem Hauptbügel bzw. mit einem anderen Bügel des Traggestells gefertigt sind erhalten diese einzelnen Bügel eine größere Stabilität bzw. mechanische Festigkeit, weil in diesem Fall die einstückig angeformten Glieder der Windleitvorrichtung jeweils auf den ihnen zugeordneten Bügel stabilisierend bzw. versteifend wirken. Das ist besonders wichtig, wenn der Hauptbügel oder das gesamte Traggestell aus Kunststoff hergestellt ist. Insgesamt ist dadurch eine weitere Verbesserung des Wischverhaltens und der Wischqualität des Wischblattes erreichbar. Durch die angegebene, möglichst spaltfreie Gestaltung der Trennungsstellen zwischen den einzelnen Gliedern der Windleitvorrichtung ist beabsichtigt, eine eventuelle Störung der Strömungsverhältnisse an diesen Stellen so gering als möglich zu halten und damit eine Verschlechterung der Wischqualität zu vermeiden. Gleichzeitig erhält das Wischblatt dadurch in vorteilhafter Weise eine stilistisch ansprechende und harmonische Form.

Durch die mit dem Traggestell verbundene Windleitvorrichtung wird eine vorteilhaft günstige Anpreßwirkung des Wischgummis gegen die zu wischende Scheibe erreicht, wenn die einzelnen Glieder der Windleitvorrichtung in strömungsgünstig vorteilhafter Weise von der dem Fahrtwind zugewandten vorderen Kante des Rückens des jeweiligen Bügels des Traggestells ausgehen und sich in der Art eines Windleitprofils in Richtung auf die zu wischende Scheibe und dabei entgegen dem Fahrtwind erstrecken. Die vorteilhafte Wirkung dieser Maßnahme kann noch dadurch verbessert werden, wenn gemäß Anspruch 6 der Rücken des Hauptbügels mit Durchbrüchen versehen ist, die sich vorzugsweise über seine gesamte Breite erstrecken und den an der Unterseite der Windleitvorrichtung entlangströmenden Teil des Fahrtwindes zumindest zum größten Teil hindurchtreten lassen.

Auch die Stabilität bzw. Steifigkeit der einzelnen Bügel des Traggestells und damit des Traggestells insgesamt wird durch eine Ausgestaltung der mit den Gliedern der Windleitvorrichtung ausgestatteten Bügel weiter verbessert. Weil die Glieder der Windleitvorrichtung jeweils am Rücken, das heißt an dessen vorderen Kante, angesetzt sind, wird die Stabilität an einer wichtigen Stelle für die Tragfähigkeit des Bügels verbessert. Eine Anformung der Windkeitvorrichtung an einer peripheren Kante könnte sich, wenn überhaupt, nur wesentlich weniger vorteilhaft auf die Stabilität und Steifigkeit des Bügels bzw. des Traggestells auswirken.

Ein vorteilhaft einfacher Aufbau des Traggestells ist dadurch erreichbar, daß die mit den untergeordneten Bügeln des Traggestells verbundenen Glieder der Windleitvorrichtung jeweils an den Teil des Bügels angeformt sind, der längs aus dem ihm übergeordneten Bügel herausragt. Dadurch, daß das jeweilige Glied der Windleitvorrichtung also an den nicht vom übergeordneten Bügel überdeckten Teil sondern an den frei zugängigen Teil des jeweiligen untergeordneten Bügels angeformt ist, können die einzelnen untergeordneten Bügel einschließlich der zugehörigen Glieder der Windleitvorrichtung hinsichtlich ihrer Form unkompliziert einfach gestaltet sein. Dadurch wird auch ihre Herstellung sehr kostengünstig.

Am einfachsten und damit am günstigsten herstellbar sind die untergeordneten Bügel des Traggestells vermutlich dann, wenn sich bei Betrachtung des fertigen Wischblattes die Trennungsstellen zwischen den einzelnen Gliedern der Windleitvorrichtung jeweils in Höhe der Stirnseite des benachbarten übergeordneten Bügels befinden. Anders betrachtet bedeutet das, daß sich das jeweilige, an einen Bügel angeformte Glied der Windleitvorrichtung von der äußeren Stirnseite des ihm zugeordneten Bügels bis zur äußeren Stirnseite des ihm benachbarten, übergeordneten Bügels erstreckt. Andererseits nimmt man dabei den Nachteil in Kauf, daß die durch den Fahrtwind erzeugte Anpreßkraft nunmehr nur auf den äußeren Teil des jeweiligen Bügels wirkt, wodurch dieser Bügel in seinem äußeren Teil eine erhöhte Anpreßkraft überträgt, aber in seinem inneren Teil eher entlastet wird.

Der letztgenannte Nachteil läßt sich durch eine vorteilhafte Ausgestaltung der Erfindung gemäß Anspruch 4 kompensieren, was aber eine etwas kompliziertere Formgestaltung der Bügel bzw. der Windleitvorrichtung erfordert. Gemäß Anspruch 4 ist vorgesehen, daß die Trennungsstellen zwischen den Gliedern der Windleitvorrichtung an einem von der Stirnseite des übergeordneten Bügels in Richtung zur Mitte des Traggestells zurückgesetzten Ort vorgesehen sind und die mit den untergeordneten Bügeln verbundenen Glieder der Windleitvorrichtung eine freitragende Verlängerung in Längsrichtung aufweisen, welche sich entlang eines Teiles des übergeordneten Bügels bis zur jeweiligen Trennungsstelle erstrecken. Dabei soll die freitragende Verlängerung des Gliedes der Windleitvorrichtung vorzugsweise bis in die Nähe des inneren Endes des ihm zugeordneten Bügels reichen. Durch diese Maßnahme wird erreicht, daß der durch den anströmenden Fahrtwind erzeugte Anpreßdruck entsprechend gleichmäßig auf beide Enden des betreffenden Bügels übertragen wird. Entsprechend gleichmäßig ist dann auch die Verteilung der durch die Windleitvorrichtung erzeugten Anpreßkraft auf die Länge des Wischgummis, was Voraussetzung für eine gute Wischqualität ist. Durch die Gestaltung der Länge eines Gliedes der Windleitvorrichtung bzw. durch den Längenanteil eines Gliedes der Windleitvorrichtung beiderseits der Anlenkstelle des zugehörigen Bügels an seinem übergeordneten Bügel läßt sich die Verteilung der durch dieses Glied der Windleiteinrichtung erzeugten Anpreßkraft über den Bügel auf den Wischgummi regulieren. Diese Verteilung kann entweder bewußt gleichmäßig oder auch an einem Ende des Bügels bewußt stärker gewählt werden.

In dem Fall, daß die äußeren Krallenbügel nicht mit einem Glied der Windleitvorrichtung versehen sind, kann durch eine vorteilhafte Ausgestaltung gemäß Anspruch 3 der Anpreßdruck im Bereich des äußeren Krallenbügels dadurch erhöht werden, daß das Glied der Windleitvorrichtung, welches mit dem relativ zu dem Krallenbügel übergeordneten Bügel verbunden ist, eine freitragende, flügelartige Verlängerung in Längsrichtung aufweist, welche die äußere Stirnseite dieses übergeordneten Bügels in Richtung zum äußere Ende des Wischblattes hin überragt und sich dabei längs eines Teiles des äußeren Krallenbügels erstreckt.

Es wird weiterhin eine vorteilhafte Ausgestaltung des erfindungsgemäßen Wischblattes gemäß Anspruch 5 empfohlen, wonach die jeweils untergeordneten Bügel im Bereich ihrer Anlenkstellen an den jeweils übergeordneten Bügel derart stufenartig ausgebildet sind, daß sich die Außenfläche des untergeordneten Bügels im Prinzip absatzlos an die Außenfläche des übergeordneten Bügels anschließt. Damit wird erreicht, daß das Traggestell des Wischblattes insgesamt eine harmonische Außenfläche mit möglichst wenig Unterbrechungen bzw. Zerklüftungen aufweist, was sich insgesamt vorteilhaft auf die Strömungsverhältnisse am Wischblatt auswirkt. Nebenbei wird durch diese Maßnahme auch noch ein gutes stilistisches Aussehen des Wischblattes erreicht.

Eine andere vorteilhafte Ausgestaltung der Erfindung gemäß Anspruch 7 sieht vor, daß das gesamte Traggestell einschließlich Windleitvorrichtung sowie die Gelenkbolzen, welche die Bügel des Traggestells untereinander verbinden, aus Kunststoff gefertigt sind. Gegenüber einer Fertigung aus Stahlblech hat dies den Vorteil, daß ein Wischblatt aus Kunststoff ein wesentlich geringeres Gewicht aufweist. Außerdem erlaubt die Herstellung aus Kunststoff, insbesondere durch Spritzgießen, eine wesentlich größere Vielfalt an Formgestaltungsmöglichkeiten und damit eine möglichst optimale Abstimmung der Gestalt des Wischblattes bzw. des Traggestells und der Windleitvorrichtung im Hinblick auf ein möglichst günstiges Strömungsverhalten zur Erzielung eines optimalen Anpreßdruckes des Wischgummis gegen die zu wischende Scheibe. Wenn dann außerdem noch günstige Voraussetzungen für die Entsorgung verbrauchter Wischblätter geschaffen werden sollen, sollten die einzelnen Bügel des Traggestells mit den angeformten Gliedern der Windleitvorrichtung sowie die Gelenkbolzen, welche die Bügel untereinander verbinden, aus, vorzugsweise dem gleichen, wiederverwertbaren Kunststoffmaterial gefertigt sein. Bei der Entsorgung eines derartigen Wischblattes braucht nur der Wischgummi mit den Federschienen vom Traggestell entfernt zu werden und das Traggestell kann sofort der Wiederverwertung zugeführt werden.

Eine weitere Verbesserung des Wischverhaltens einer Scheibenwischvorrichtung ist durch eine straffe seitliche Führung der einzelnen Bügel des Traggestells erreichbar. Deshalb wird eine vorteilhafte Ausgestaltung gemäß Anspruch 8 empfohlen, wonach der übergeordnete Bügel in dem Bereich des inneren Endes des von ihm übergriffenen untergeordneten Bügels U-artig geformt ist, so daß das innere Ende des untergeordneten Bügels an den Innenseiten dieses U-artigen Bereiches des übergeordneten Bügels seitlich geführt ist.

Außerdem wird eine Ausgestaltung gemäß Anspruch 10 empfohlen, wonach in den Anlenkstellen eines untergeordneten Bügels an einem übergeordneten Bügel, wobei die Bügel im Bereich der Anlenkstelle jeweils einen U-artigen Querschnitt aufweisen und der übergeordnete Bügel den untergeordneten Bügel übergreift, ein Gelenkbolzen in fluchtenden Bohrungen der Seitenschenkel der Bügel so angeordnet ist, daß er drehfest und axial gesichert an dem untergeordneten Bügel gehalten ist und drehbar in dem übergeordneten Bügel gelagert ist. Dadurch wird erreicht, daß der untergeordnete Bügel möglichst spielfrei am übergeordneten Bügel gelagert ist und diese relativ straffe Lagerung im Verlaufe der Betriebsdauer möglichst wenig abgebaut wird.

Der Hauptbügel des Traggestells besitzt in seinem mittleren Bereich einen sogenannten Einhängekasten, der zum schwenkbaren Verbinden des Wischblattes mit einem Wischarmende, vorzugsweise mittels eines entsprechenden Verbindungsstückes, ausgebildet ist. Dieser Einhängekasten wird zumeist von zwei parallelen Wänden des Hauptbügels gebildet und ist nach oben und/oder nach unten geöffnet, damit das Wischarmende mittels eines Verbindungsstückes in diesen Einhängekasten eingreifen kann. Um im Bereich des Einhängekastens die Strömungsverhältnisse nicht durch Vorsprünge oder starke Absätze oder dergleichen nachteilig zu beeinflussen, wird eine Ausgestaltung gemäß Anspruch 9 empfohlen. Diese Ausgestaltung sieht vor, daß im Bereich des Einhängekastens der Raum zwischen der vorderen, d. h. dem Fahrtwind zugewandten, Seitenwand des Einhängekastens und der vom Fahrtwind abgewandten Rückseite bzw. Unterseite der Windleitvorrichtung geschlossen ist oder mit Material ausgefüllt ist. Dadurch ist es möglich, Übergänge zwischen der Windleitvorrichtung und dem Einhängekasten möglichst harmonisch und damit strömungstechnisch günstig zu gestalten.

Anhand von Ausführungsbeispielen wird die Erfindung nachfolgend näher beschrieben. Die zugehörigen Zeichnungen zeigen:
- Fig. 1: in perspektivischer Darstellung ein Wischblatt mit mehrgliedriger Windleitvorrichtung,
- Fig. 2: eine Ansicht eines anderen Wischblattes mit mehr gliedriger Windleitvorrichtung,
- Fig. 3: eine Draufsicht auf das Wischblatt von Fig. 2,
- Fig. 4: einen Schnitt durch den Hauptbügel des Traggestells entlang der Linie IV - IV in Fig. 2,
- Fig. 5: einen Schnitt durch das Traggestell entlang der Li nie V - V in Fig. 2,
- Fig. 6: eine Ansicht eines Zwischenbügels des Traggestells von Fig. 2 bzw. 3,
- Fig. 7: eine Draufsicht des Zwischenbügels von Fig. 6,
- Fig. 8: eine Ansicht eines äußeren Krallenbügels des Trag gestells von Fig. 2 bzw. 3,
- Fig. 9: eine Draufsicht des äußeren Krallenbügels von Fig.8,
- Fig. 10: in Draufsicht ein weiteres Ausführungsbeispiel eines Wischblattes mit mehrgliedriger Windleitvorrichtung,
- Fig. 11: in Draufsicht ein weiteres Ausführungsbeispiel eines Wischblattes mit mehrgliedriger Windleitvorrichtung und
- Fig. 12: in Draufsicht ein weiteres Ausführungsbeispiel eines Wischblattes mit mehrgliedriger Windleitvorrichtung

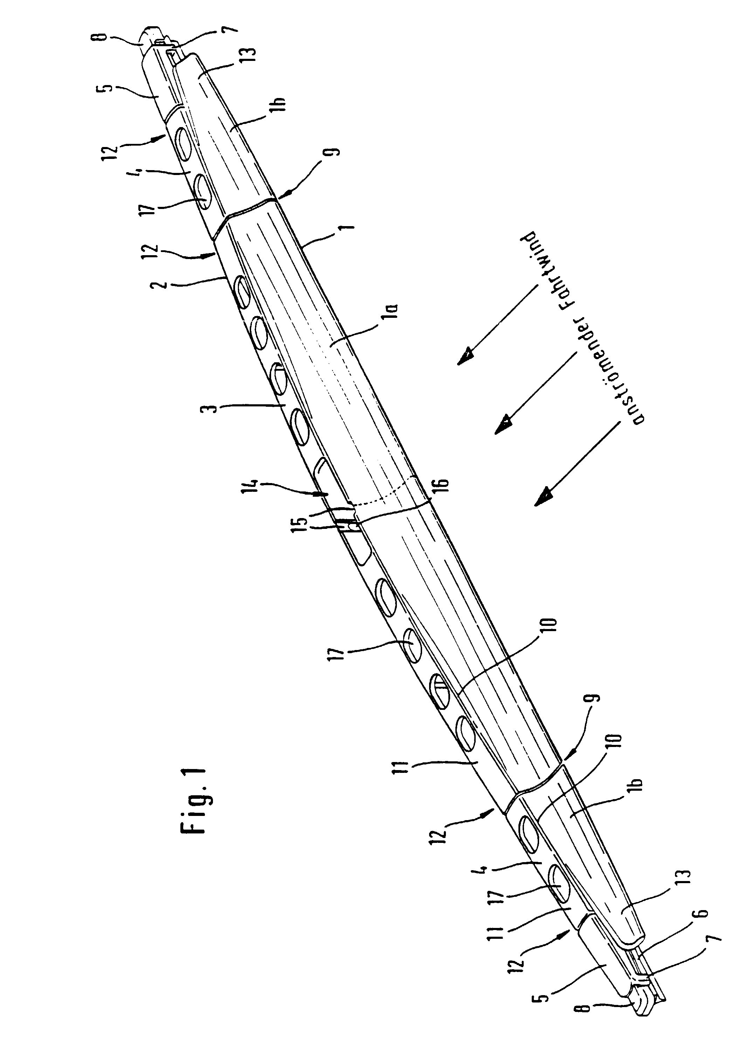

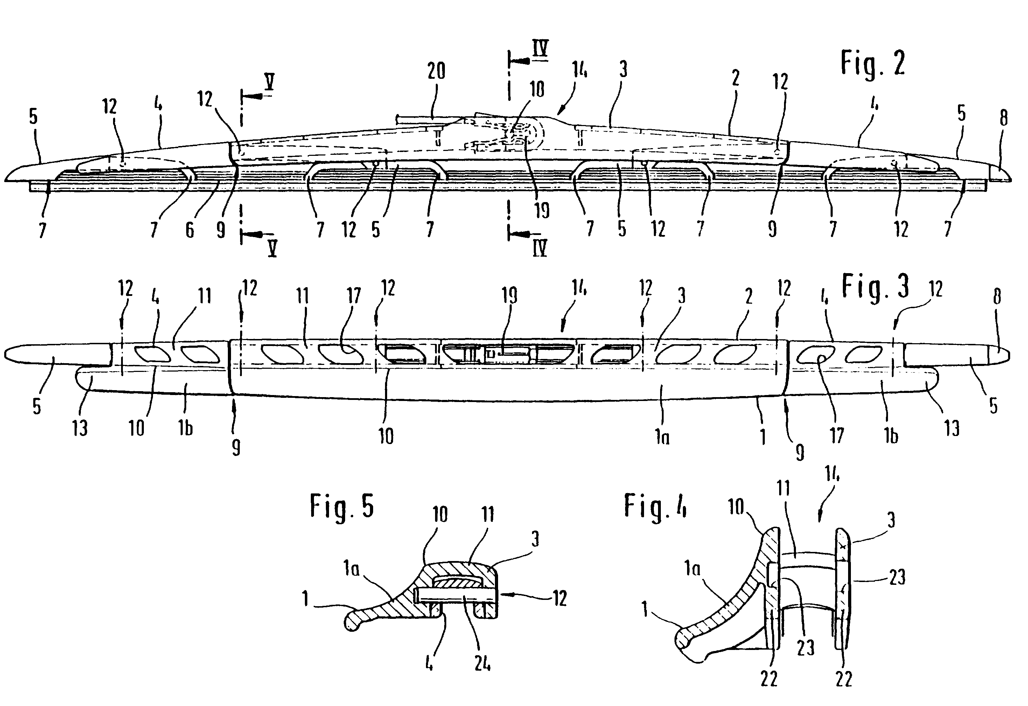

In Fig. 1 ist ein Wischblatt für eine Scheibenwischvorrichtung eines Kraftfahrzeuges gezeigt, bei welchem eine Windleitvorrichtung 1 einstückig mit dem Traggestell 2 des Wischblattes verbunden und dabei an der dem anströmenden Fahrtwind zugewandten Längsseite des Traggestells 2 angeordnet ist. Das Traggestell 2 ist aus einem Hauptbügel 3 und einer Anzahl anderer Bügel kaskadenartig aufgebaut, wobei an den gegenüberliegenden Enden des Hauptbügels 3 jeweils ein Zwischenbügel 4 um eine quer zur Längsrichtung des Traggestells 2 verlaufende Achse schwenkbar angelenkt ist. An den gegenüberliegenden Enden der beiden Zwischenbügel 4 ist jeweils ein Krallenbügel 5 um eine quer zum Traggestell 2 verlaufende Achse schwenkbar angelenkt. Entsprechend einer vorgegebenen Hierarchie ist der Hauptbügel 3 den Zwischenbügeln 4 übergeordnet, und die Zwischenbügel 4 sind den Krallenbügeln 5 übergeordnet. In Fig. 1 sind nur die äußeren Krallenbügel 5 sichtbar. Deshalb wird bereits hier kurz auf Fig. 2 verwiesen, in welcher auch die inneren Krallenbügel 5 sichtbar sind und die genannte Hierarchie der Bügel besser erkennbar ist. In Fig. 1 ist weiterhin zu sehen, daß der Wischgummi 6, welcher in Betriebsstellung des Wischblattes mit seiner Wischlippe auf der zu wischenden Scheibe aufliegt, von den Krallen 7 der Krallenbügel 5 gehalten und geführt wird. Mittels jeweils eines Endstückes 8, welches mit einem Ende des Wischgummis 6 und ggf. auch mit dem äußeren Krallenbügel 5 verbunden ist, ist der Wischgummi 6 in seiner Längsrichtung an dem Traggestell 2 gesichert.

Es ist weiterhin zu erkennen, daß die Windleitvorrichtung 1, die sich nahezu über die gesamte Länge des Traggestells 2 erstreckt, im wesentlichen quer zu ihrer Längsrichtung in mehrere Glieder 1a, 1b geteilt ist, so daß jeweils eine Trennungsstelle 9 zwischen den Gliedern 1a und 1b gebildet ist. An den Trennungsstellen 9 der Windleitvorrichtung 1 sind die aneinander gegenüberstehenden Stirnseiten der Glieder la und 1b in ihrer Form derart aneinander angepaßt, daß sich diese Stirnseiten beim Betrieb der Scheibenwischvorrichtung nahezu spaltfrei gegenüberstehen. Das Glied la der Windleitvorrichtung 1 ist einstückig mit dem Hauptbügel 3 gefertigt und die Glieder 1b sind jeweils einstückig mit einem Zwischenbügel 4 gefertigt. Dabei gehen die Glieder la, 1b jeweils von der vorderen, dem Fahrtwind zugewandten Kante 10 des Rückens 11 des jeweiligen Bügels aus und erstrecken sich in der Form eines Windleitprofils in Richtung auf die zu wischende Scheibe und entgegen dem Fahrtwind. Diese geschlossen, unmittelbar in das Traggestell 2 übergehende Form der Windleitvorrichtung 1 ist vorteilhaft strömungsgünstig und sorgt, insbesondere bei aus Kunststoff gefertigtem Traggestell für eine gute mechanische Steifigkeit der einzelnen Bügel und damit für eine gute seitliche Führung des Wischgummis 6 durch das Traggestell 2.

Die Glieder 1b der Windleitvorrichtung 1 sind jeweils an den Teil des dem Hauptbügel 3 untergeordneten Zwischenbügels angeformt, der längs aus dem Hauptbügel 3 herausragt, also nicht von dem Hauptbügel 3 überdeckt ist. Außerdem sind die Trennungsstellen 9 in Höhe der äußeren Stirnseiten des Hauptbügels 3 vorgesehen, so daß die an die Zwischenbügel 4 angeformten Glieder 1b ihre Anpreßkraft jeweils in den Teil des Zwischenbügels 4 einleiten, der, ausgehend von der jeweiligen Anlenkstelle 12 des Zwischenbügels 4 am Hauptbügel 3, nach auswärts gerichtet ist. Dadurch wird insbesondere der Anpreßdruck des Wischgummis 6 in dem Bereich erhöht, der in Längsrichtung außerhalb des Hauptbügels 3 liegt. Das ist dadurch möglich, daß die Glieder 1b der Windleitvorrichtung 1 gemeinsam mit dem Zwischenbügel 4 gegenüber dem Glied 1a der Windleitvorrichtung unabhängig verschwenkbar sind. Das hat auch noch den Vorteil, daß beim Wischen von Scheiben mit relativ stark gekrümmter Oberfläche die äußeren Abschnitte der Windleitvorrichtung 1, also die Glieder 1b, zumindest annähernd den gleichen Abstand zu der zu wischenden Scheibe einnehmen können, wie das mit dem Hauptbügel 3 verbundene Glied 1a der Windleitvorrichtung. Wie bereits erwähnt, werden dadurch insgesamt die Strömungsverhältnisse des Wischblattes verbessert, weil, bezogen auf die Länge der Windleitvorrichtung 1, an allen Stellen nahezu die gleiche Menge des anströmenden Fahrtwindes durch den Abstand zwischen der zu wischenden Scheibe und der ihr zugewandten Kante der Windleitvorrichtung 1 hindurchströmen kann.

Letztendlich ist in Fig. 1 zu erkennen, daß die äußeren Krallenbügel 5 nicht mit einem Glied der Windleitvorrichtung 1 ausgestattet sind. Stattdessen weisen die mit dem jeweils benachbarten Zwischenbügel 4 verbundenen Glieder 1b der Windleitvorrichtung 1 eine in Längsrichtung nach außen gerichtete, freitragende, flügelartige Verlängerung 13 auf, die sich längs des äußeren Krallenbügels 5 erstreckt und nahezu bis zu dessen äußerem Ende reicht. Dadurch wird die wirksame Fläche der Glieder 1b noch weiter vergrößert, so daß auch über die Anlenkstellen 12 von den Zwischenbügeln 4 ein Anteil der Anpreßkraft in die äußeren Krallenbügel 5 eingeleitet wird.

Im mittleren Bereich des Hauptbügels 3 ist der sogenannte Einhängekasten 14 zum schwenkbaren Befestigen des Wischblattes an dem Ende eines Wischarmes 20 (Fig. 2 und 3) zu erkennen. Insbesondere ist zu sehen, daß vom Rücken 11 her in den gegenüberliegenden Seitenwänden des Einhängekastens 14 jeweils eine Einführungsnut 15 bis zu einer Lagerbohrung 16 führt, durch welche ein mit einem Verbindungsstück verbundener Gelenkbolzen oder Gelenkzapfen bis zum Einrasten in die Lagerbohrung 6 einführbar ist. Außerdem sind noch die in den Rücken 11 des Hauptbügels 3 und der Zwischenbügel 4 eingebrachten Durchbrüche 17 zu sehen, welche sich gewissermaßen über die ganze Breite des Rückens 11 erstrecken und welche dazu bestimmt sind, einen Teil des an der Rückseite der Windleitvorrichtung 1 entlangströmenden Fahrtwindes hindurchtreten zu lassen. Die in Höhe der Einführungsnut 15 des Einhängekastens 14 in das Glied 1a der Windleitvorrichtung 1 gestrichelt eingezeichnete Linie hat keine technische Bedeutung. Sie soll lediglich einen Hinweis auf die Form der Oberfläche der Windleitvorrichtung 1 in diesem Bereich geben.

In den Fig. 2 und 3 ist ein weiteres Ausführungsbeispiel eines erfindungsgemäßen Wischblattes dargestellt, wobei die Fig. 4 bis 9 Details dieses Wischblattes zeigen. Das in den Fig. 2 und 3 dargestellte Wischblatt ist dem in Fig. 1 dargestellten Wischblatt sehr ähnlich. Das Traggestell 2 ist wiederum kaskadenartig aufgebaut und in einen Hauptbügel 3, zwei an den Hauptbügel 3 angelenkte Zwischenbügel 4 sowie jeweils zwei an einen Zwischenbügel 4 angelenkte Krallenbügel 5 gegliedert. Die Zwischenbügel 4, welche waagebalkenartig an den Hauptbügel 3 angelenkt sind, sind dem Hauptbügel 3 unterge-ordnet. Die Krallenbügel 5, welche jeweils waagebalkenartig an einen Zwischenbügel 4 angelenkt sind, sind dem jeweiligen Zwischenbügel 4 untergeordnet und sind gleichzeitig die am weitesten untergeordneten Bügel des Traggestells. In den Krallen 7 der Krallenbügel 5 ist der Wischgummi 6 in seiner Längsrichtung um einen gewissen Betrag verschiebbar gelagert und geführt. Die Längsbeweglichkeit des Wischgummis 6 wird durch Anschlagmittel begrenzt, welche an den beiden äußeren Krallenbügeln 5 vorgesehen sind. Am linken Ende des Wischgummis 6 ist das Anschlagmittel in den äußeren Krallenbügel 5 integriert und am rechten Ende des Wischgummis 6 ist als Anschlagmittel ein spezielles Endstück 8 vorgesehen, welches zum Zwecke des Wischgummiwechsels derart beweglich oder lösbar mit dem rechten äußeren Krallenbügel 5 verbunden ist, daß es zeitweilig in eine Stellung bringbar ist, welche den Austausch des Wischgummis 6 in dessen Längsrichtung ermöglicht.

Es ist erkennbar, daß in den Einhängekasten 14 des Hauptbügels 3 auf einem quer zur Längsrichtung des Wischblattes verlaufenden Gelenkbolzen 18 ein an sich bekanntes, U-artiges Verbindungsstück 19 mit entsprechenden Ausnehmungen an den Innenseiten seiner Uschenkel drehbar angeordnet ist, welches von dem hakenförmigen Wischarmende 20 umfaßt wird. Ansonsten entspricht das in den Fig. 2 und 3 dargestellte Wischblatt im wesentlichen demjenigen, welches in Fig. 1 gezeigt ist. Die Windleiteinrichtung 1 ist wiederum in die Glieder la und 1b geteilt, wobei das Glied la einstückig mit dem Hauptbügel 3 gefertigt ist und sich von dessen vorderen, dem anströmenden Fahrtwind zugewandten Kante 10 des Rückens 11 mit der Form eines Windleitprofils in Richtung auf die zu reinigende Scheibe und entgegen dem Fahrtwind erstreckt. Letzteres ist besonders deutlich aus den Fig. 4 und 5 ersichtlich. Aus den Fig. 2 und 3 ist noch ersichtlich, daß die Trennungsstelle 9 zwischen den Gliedern la und 1b jeweils wiederum in Höhe der äußeren Stirnseiten des Hauptbügels 3 vorgesehen sind. Da die beiden äußeren Krallenbügel 5 wiederum nicht mit einem Glied der Windleitvorrichtung 1 ausgestattet sind, weisen die beiden mit den Zwischenbügeln 4 verbundenen Glieder 1b der Windleitvorrichtung 1 wiederum eine freitragende flügelartige Verlängerung 13 auf, die sich in Längsrichtung nach auswärts erstreckt und dabei entlang eines Teiles des äußeren Krallenbügels 5 verlaufen. Weiterhin wird darauf hingewiesen, daß in den Bereichen der Anlenkstellen 12, in denen die Zwischenbügel 4 mit dem übergeordneten Hauptbügel 3 und die äußeren Krallenbügel 5 mit den übergeordneten Zwischenbügeln 4 verbunden sind, jeweils dafür gesorgt wurde, daß sich die Außenflächen der untergeordneten Bügel jeweils nahezu übergangslos an die Außenfläche des jeweils übergeordneten Bügels anschließt. Dieses wird dadurch erreicht, daß im Bereich der Anlenkstellen der jeweils untergeordnete Bügel stufenförmig abgesetzt ist, so daß der von dem jeweils übergeordneten Bügel übergriffene Teil des untergeordneten Bügels schlanker ist als der längs aus dem jeweils übergeordneten Bügel herausragende Teil des untergeordneten Bügels. Diese stufenartige Verjüngung entspricht der Wandstärke des jeweils übergeordneten Bügels im Bereich der Anlenkstelle 12, so daß, wie bereits erwähnt, die Außenflächen der einzelnen Bügel an den Anlenkstellen 12 im Prinzip absatzlos aneinander anschließen. Die sich daraus ergebenden Vorteile sind bereits im Hinblick auf die entsprechenden Unteransprüche erläutert worden.

Aus der Fig. 4, welche einen Querschnitt des Einhängekastens 14 des Hauptbügels 3 zeigt, ist ersichtlich, daß der Einhängekasten 14 im wesentlichen von den zwei parallelen Seitenwänden 21 und 22 gebildet wird, wobei der Einhängekasten 14 nach oben und nach unten offen ist. In diesen Seitenwänden 21 und 22 sind Lagerbohrungen 23 vorgesehen, in welche ein Gelenkbolzen zum Zwecke der schwenkbaren Verbindung des Wischblattes mit dem Ende eines Wischarmes 20, vorzugsweise unter Verwendung eines entsprechenden Verbindungsstückes 19 einzubringen ist. Im Hinblick auf eine bessere Aerodynamik des Wischblattes wäre hier jedoch zu empfehlen, daß die vordere, dem Fahrtwind zugewandte Seitenwand 21 nur im Bereich des Einhängekastens 14 und im Bereich der Anlenkstellen 12 für die Zwischenbügel 4 vorhanden und ansonsten entfernt ist. Vorteilhafterweise sollte dann der Zwischenraum zwischen der vorderen Seitenwand 21 und der vom Fahrtwind abgewandten Rückseite der Windleitvorrichtung 1 abgeschlossen oder mit Material ausgefüllt sein. Dadurch würde eine zusätzliche Wirbelbildung an der vorderen Seitenwand 21, welche sich negativ auf die Aerodynamik des Wischblattes auswirken würde, weitgehend vermieden.

Aus Fig. 5 ist ersichtlich, daß im Bereich der Anlenkstelle 12 der übergeordnete Bügel (Hauptbügel 3) und der untergeordnete Bügel (Zwischenbügel 4) im Querschnitt U-artig geformt sind und der übergeordnete Bügel den untergeordneten Bügel übergreift. Ein Gelenkbolzen 24, der in fluchtenden Bohrungen gelagert ist, welche in die Seitenwände der Bügel eingebracht sind, verbindet den Zwischenbügel 4 schwenkbar mit dem Hauptbügel 3. Von Vorteil ist hierbei, wenn der Gelenkbolzen 24 drehfest und in axialer Richtung gesichert an dem untergeordneten Zwischenbügel 4 festgelegt ist und drehbar in den Lagerbohrungen des Hauptbügels 3 gelagert ist. Es ist außerdem zu erkennen, daß das Glied 1a der Windleitvorrichtung einstückig mit dem Hauptbügel 3 gefertigt ist und von der dem Fahrtwind zugewandten Kante 10 des Rückens 11 ausgeht und sich in Richtung auf die nicht dargestellte Scheibe und entgegen dem Fahrtwind erstreckt. Der Raum zwischen der Rückseite der Windleitvorrichtung 1 und der vorderen Seitenwand des Hauptbügels 3 ist hier im Bereich dieser Anlenkstelle 12 mit Material vollständig ausgefüllt. In vergleichbarer Art sollte auch der entsprechende Zwischenraum in Fig. 4 ausgefüllt sein.

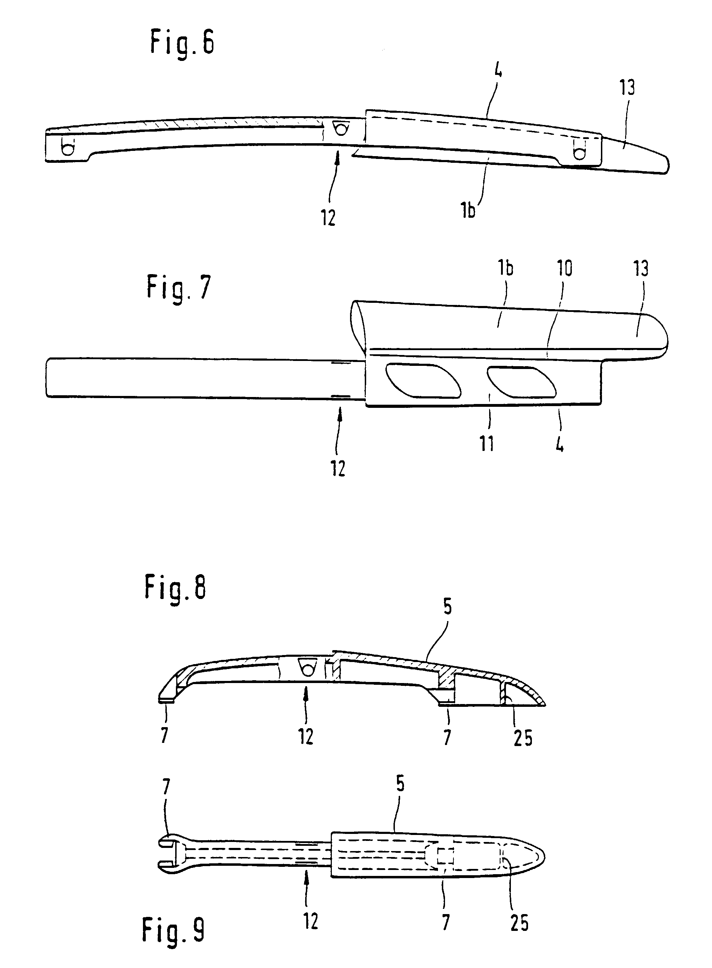

In den Fig. 6 und 7 ist in verschiedenen Ansichten ein Zwischenbügel 4 dargestellt, der demjenigen aus den Fig. 2 und 3 im wesentlichen entspricht. Das Glied 1b der Windleitvorrichtung 1 ist nur an den Teil des Zwischenbügels 4 angeformt, welcher nicht von dem übergeordneten Bügel überdeckt wird, sondern längs aus dem übergeordneten Bügel hervorsteht. Im wesentlichen ist das der Teil des Zwischenbügels 4, der auswärts neben der durch eine Bohrung für einen Gelenkbolzen definierten Anlenkstelle 12 beginnt und sich bis zur äußeren Stirnseite des Zwischenbügels 4 erstreckt.

Im vorliegenden Fall weist das Glied 1b der Windleitvorrichtung eine flügelartige, freitragende Verlängerung 13 auf, welche die wirksame Fläche dieses Gliedes 1b vergrößert und sich seitlich entlang eines Teiles des benachbarten Krallenbügels 5 erstrecken kann, aber nicht mit dem Krallenbügel 5 verbunden ist. Deutlich erkennbar ist die stufenartige Verjüngung des Zwischenbügels 4 im Bereich seiner mittleren Anlenkstelle 12, wobei sich diese Verjüngung nach der linken Seite hin bis zum Ende des Zwischenbügels 4 fortsetzt. Dieser verjüngte Teil des Zwischenbügels 4 wird von dem übergeordneten Hauptbügel 3 übergriffen. Die Verjüngung ist so gestaltet und bemessen, daß sie die Wanddicke des übergeordneten Hauptbügels kompensiert, so daß sich die Außenseite des aus dem Hauptbügel 3 herausragenden Teiles des Zwischenbügels 4 absatzfrei an die Außenfläche des Hauptbügels anschließen kann. In Fig. 7 sind außerdem noch die Durchbrüche 17 im Rücken 11 an dem aus dem übergeordneten Bügel herausragenden Teil des Zwischenbügels 4 zu erkennen, welche zumindest einen Teil des an der Unterseite des Gliedes 1b der Windleitvorrichtung 1 entlangströmenden Fahrtwindes hindurchtreten lassen.

In analoger Weise sind die äußeren Krallenbügel 5 stufenartig ausgebildet, was aus den Fig. 8 und 9 ersichtlich ist. In diesem Fall ist der von dem übergeordneten Zwischenbügel 4 überdeckte Teil des Krallenbügels 5 gegenüber dem aus dem Zwischenbügel 4 herausstehenden Teil derart stufenartig verjüngt ausgebildet, daß die Wanddicke des Zwischenbügels 4 kompensiert wird und sich die Außenfläche des aus dem Zwischenbügel herausragenden Teiles des Krallenbügels 5 absatzlos an die Außenfläche des Zwischenbügels 4 anschließen kann. In den Fig. 8 und 9 sind außerdem noch die Krallen 7 erkennbar, welche den Wischgummi aufnehmen und führen. Außerdem ist ein fest an den Endbereich des Krallenbügels 5 angeformtes Anschlagmittel 25 zu erkennen, welches einem äußeren Ende des Wischgummis gegenübersteht und die Längsbeweglichkeit des Wischgummis am Traggestell 2 begrenzt.

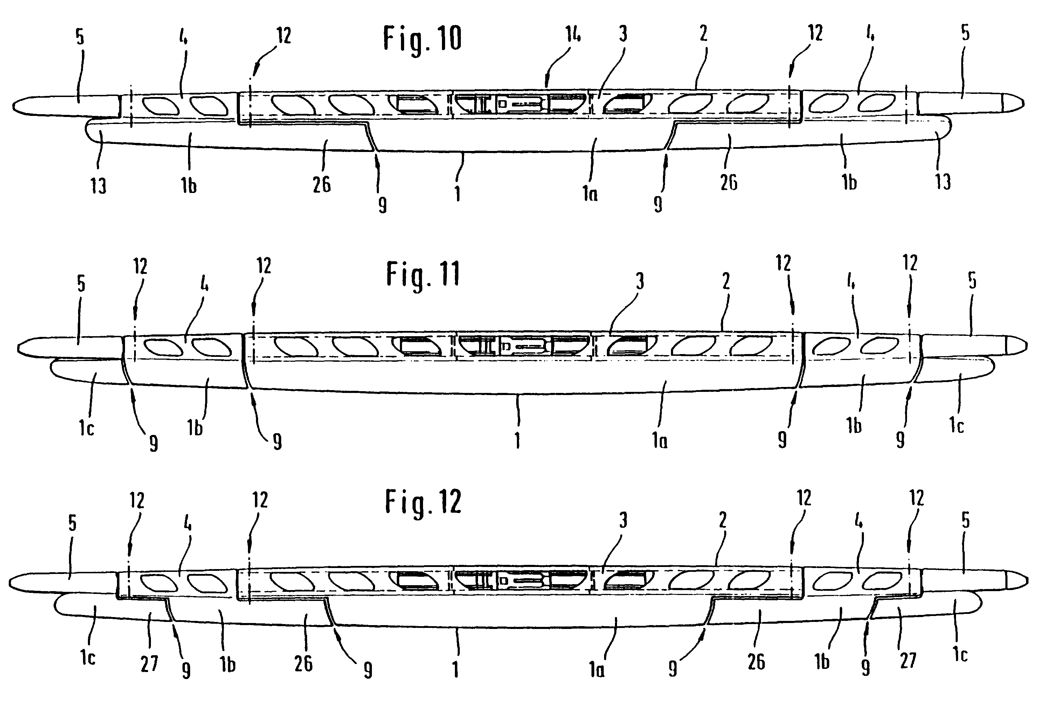

Die Ausführungsbeispiele gemäß der Fig. 10 bis 12 sind im wesentlichen darauf gerichtet, weitere Möglichkeiten bzw. Varianten für die Aufteilung bzw. Gliederung der Windleitvorrichtung 1 zu erläutern. Aus Fig. 10 ist ersichtlich, daß die Trennungsstelle 9 zwischen den Gliedern 1a und 1b der Windleitvorrichtung 1 von den äußeren Stirnseiten des Hauptbügels 3 zur Mitte hin zurückversetzt sind, und zwar bis in die Nähe des inneren Endes des Zwischenbügels 4. Die mit den Zwischenbügeln 4 verbundenen Glieder 1b besitzen deshalb in Längsrichtung zur Mitte des Hauptbügels 3 gerichtete freitragende Verlängerungen 26, welche seitlich am Hauptbügel 3 entlanglaufen und bis jeweils zu einer Trennungsstelle 9 reichen. An den Trennungsstellen 9 sind die Stirnseiten der Glieder la und 1b in ihrer Form derart aneinander angepaßt, daß sie sich in Betriebsstellung des Wischblattes gewissermaßen spaltfrei gegenüberstehen. Außerdem besitzen die mit den Zwischenbügeln verbundenen Glieder 1b der Windleitvorrichtung 1 die bereits beschriebenen, nach auswärts gerichteten flügelartigen Verlängerungen 13, welche sich entlang eines Teiles der äußeren Krallenbügel 5 erstrecken. Durch diese Anordnung bzw. Ausbildung der Glieder 1a und 1b der Windleitvorrichtung 1 wird eine bestimmte Verteilung der durch die Windleitvorrichtung 1 erzeugten Anpreßkraft über die einzelnen Bügel auf den Wischgummi 6 erreicht. Durch die Verkleinerung des Gliedes la wird die vom Hauptbügel 1 in den Anlenkstellen 12 in die Zwischenbügel 4 eingeleitete Anpreßkraft etwas verringert. Andererseits wird die durch die Glieder 1b erzeugte Anpreßkraft relativ gleichmäßig auf die beiden Enden der Zwischenbügel 4 verteilt, wobei das äußere Ende etwas stärker belastet wird, weil an diesem Ende ein Teil der Anpreßkraft auf dem der Krümmung der zu wischenden Scheibe folgenden äußeren Krallenbügel 5 übertragen wird. Insgesamt ist also eine relativ gleichmäßige Verteilung der durch die Windleitvorrichtung 1 erzeugten Anpreßkraft auf die Länge des Wischgummis 6 gegeben.

Bei dem in Fig. 11 dargestellten Wischblatt sind der Hauptbügel 3 mit dem Glied 1a, die Zwischenbügel 4 jeweils mit dem Glied 1b und die äußeren Krallenbügel 5 jeweils mit dem Glied 1c der Windleitvorrichtung 1 ausgestattet. Die Trennungsstelle 9 zwischen den Gliedern 1a und 1b bzw. zwischen den Gliedern 1b und 1c sind jeweils an der äußeren Stirnseite des jeweils übergeordneten Bügels vorgesehen. Diese Gliederung der Windleitvorrichtung 1 ist darauf gerichtet, die jeweils äußeren Bereiche des Wischgummis 6 mit einem höheren Anpreßdruck auszustatten, als den mittleren Bereich des Wischgummis. Dieses ist insbesondere dann von Vorteil, wenn die zu wischende Scheibe eine relativ starke konvexe Krümmung aufweist und der Wischgummi 6 dieser Krümmung folgen und auch in seinen Außenbereichen mit einem ausreichend großen Anpreßdruck auf der zu wischenden Scheibe aufliegen soll. Ansonsten wäre mit einer verschlechterten Wischqualität in den Außenbereichen des Wischgummis zu rechnen. Diese bewußt stärker auf die Außenbereiche des Traggestells 2 gerichtete Verteilung der von der Windleitvorrichtung erzeugten Anpreßkraft wird dadurch erreicht, daß sich die Glieder 1b und 1c jeweils nur entlang dem äußeren Teil des Bügels erstrecken, mit den sie einstückig gefertigt sind. Die von den Gliedern 1b und lc erzeugte Anpreßkraft wird also jeweils in dem Teil des Bügels eingeleitet, der sich von seiner Anlenkstelle 12 am übergeordneten Bügel nach auswärts erstreckt.

Im letzten Ausführungsbeispiel gemäß Fig. 12 soll wiederum eine möglichst gleichmäßige Verteilung der durch die Windleitvorrichtung 1 erzeugten Anpreßkraft über das Traggestell 2 auf den Wischgummi 6 erreicht werden. Diese Maßnahme ist insbesondere bei im wesentlichen ebenen zu wischenden Scheiben von Vorteil. Bei dem gezeigten Wischblatt sind der Hauptbügel 3 mit dem Glied 1a, die Zwischenbügel 4 mit jeweils einem Glied 1b und die äußeren Krallenbügel 5 mit jeweils einem Glied 1c der Windleitvorrichtung 1 ausgestattet. Analog zu dem Wischblatt von Fig. 10 sind auch hier die Trennungsstelle 9 zwischen dem Glied 1a und den Gliedern 1b von den äußeren Stirnseiten des Hauptbügels weiter nach innen versetzt. Dementsprechend sind die mit den Zwischenbügeln 4 verbundenen Glieder 1b der Windleitvorrichtung mit einer Verlängerung 26 ausgestattet, die sich in Längsrichtung nach innen jeweils bis zu einer Trennungsstelle 9 erstreckt. An diesen Trennungsstellen 9 stehen sich die Stirnseiten der Glieder 1a und 1b wiederum gewissermaßen spaltfrei gegenüber. Im Unterschied zu dem in Fig. 10 dargestellten Wischblatt sind nunmehr die Trennungsstellen 9 zwischen den Gliedern 1b und 1c von der äußeren Stirnseite der Zwischenbügel 4 weiter in Richtung zur Mitte des Traggestells 2 zurückgesetzt. Dementsprechend sind die jeweils mit dem äußeren Krallenbügel 5 verbundenen Glieder 1c der Windleitvorrichtung 1 mit einer Verlängerung 27 ausgestattet, die sich längs in Richtung zur Mitte des Traggestells 2 erstreckt und seitlich am Zwischenbügel 4 entlangläuft ohne mit diesem verbunden zu sein. An den Trennungsstellen 9 stehen sich die Stirnseiten der Glieder 1b und 1c wiederum nahezu spaltfrei gegenüber. Diese Anordnung bzw. Aufteilung und Ausbildung der einzelnen Glieder 1a bis 1c der Windleitvorrichtung 1 sorgt also für eine im wesentlichen gleichmäßige Verteilung der von der Windleitvorrichtung 1 erzeugten Anpreßkraft auf die Länge des Wischgummis 6. Dadurch, daß sich die Glieder 1b und 1c der Windleitvorrichtung jeweils zu etwa gleichen Teilen beiderseits der Anlenkstelle 12 ihres Bügels am jeweils übergeordneten Bügel erstrecken, wird die durch sie in den betreffenden Bügel eingeleitete Anpreßkraft gleichmäßig auf dessen beiden Enden verteilt, so daß im Endeffekt die gewünschte gleichmäßige Kräfteverteilung erreicht wird.

Es sei noch darauf hingewiesen, daß bei allen dargestellten und beschriebenen Ausführungsbeispielen alle Bügel des Traggestells 2 einschließlich der Glieder la bis lc der Windleitvorrichtung 1 sowie die zum Anlenken der jeweils untergeordneten Bügel an den jeweils übergeordneten Bügel verwendeten Gelenkbolzen 24 aus, vorzugsweise dem gleichen, wiederver-wertbaren, Kunststoffmaterial hergestellt sind. Die sich daraus ergebenden Vorteile sind bereits im Zusammenhang mit den Patentansprüchen angegeben worden.

Letztendlich ist noch zu bemerken, daß die Struktur des Wischblattes bzw. des Traggestells 2 in den Ausführungsbeispielen gemäß den Fig. 1 bis 12 prinzipiell beschrieben ist und ebenso auf weitere Varianten ausgedehnt werden kann. Beispielsweise kann auch ein Wischblatt erfindungsgemäß ausgestaltet sein, bei welchem unmittelbar an die gegenüberliegenden Enden des Hauptbügels 3 die äußeren Krallenbügel 5 angelenkt sind, also keine Zwischenbügel 4 existieren. In diesem Fall sind an den Hauptbügel 3 das Glied la und an die Krallenbügel 5 die Glieder 1c der Windleitvorrichtung 1 einstückig angeformt und in erfinderischer Weise gestaltet. Ebenso ist es möglich, daß entsprechend der Lehre der Erfindung zwischen dem Hauptbügel 3 und den Krallenbügeln 5 weitere einander untergeordnete Zwischenbügel in der Struktur des Traggestells 2 enthalten sein können. In diesem Fall sind der Hauptbügel 3 und die jeweils äußeren Zwischenbügel 4 und ggf. die äußeren Krallenbügel 5 mit Gliedern der Windleitvorrichtung ausgestattet, die entsprechend der Lehre der Erfindung ausgestaltet sind. Desweiteren sollten auch die Rücken 11 der weiteren Zwischenbügel in harmonischer Weise mit entsprechend geformten Durchbrüchen 17 versehen sein.

## Patentansprüche

1. Wischblatt für eine Scheibenwischvorrichtung eines Fahrzeuges insbesondere eines Kraftfahrzeuges, mit folgenden Merkmalen:
- das Wischblatt weist ein Traggestell (2) auf, welches aus einem Hauptbügel (3) und einer Anzahl anderer Bügel, die entsprechend ihrer Funktion auch als Zwischenbügel (4) oder Krallenbügel (5) bezeichnet werden, kaskadenartig aufgebaut ist;
- die anderen Bügel besitzen untereinander eine Hierarchie, so daß jeweils der näher am Hauptbügel (3) angeordnete Bügel dem ferner vom Hauptbügel (3) angeordneten Bügel übergeordnet ist und die am weitesten untergeordneten Bügel die Krallenbügel (5) sind;
- die untergeordneten Bügel sind jeweils in der Art eines Waagebalkens um eine quer zur Längsrichtung des Traggestells (2) verlaufende Achse schwenkbar an einem Ende des jeweils übergeordneten Bügels angelenkt, so daß Anlenkstellen (12) gebildet sind;
- zumindest an den Anlenkstellen (12) sind der Hauptbügel (3) und die anderen Bügel im Querschnitt U-artig geformt, und in diesen Anlenkstellen (12) übergreift jeweils der übergeordnete Bügel den untergeordneten Bügel;
- der Hauptbügel (3) besitzt in seinem mittleren Bereich einen sogenannten Einhängekasten (14), der zum schwenkbaren Verbinden des Wischblattes mit dem freien Ende eines Wischarmes (20), vorzugsweise mittels eines entsprechenden Verbindungsstückes (19), ausgebildet ist;
- mit dem Traggestell (2) ist eine Windleitvorrichtung (1) zur Erhöhung des Anpreßdruckes des Wischgummis (6) gegen die zu wischende Scheibe durch den anströmenden Fahrtwind verbunden, welche an der dem Fahrtwind zugewandten Längsseite des Traggestells (2) angeordnet ist;
- die Windleitvorrichtung (1) ist im wesentlichen quer zu ihrer Längsrichtung in mehrere Glieder (1a, 1b, 1c) geteilt, die an ihren Trennungsstellen (9) derartig aneinander angepaßt sind, daß sie beim Betrieb der Scheibenwischvorrichtung eine nahezu durchgängige Windleitvorrichtung (1) bilden,
- ein Glied (1a) ist einstückig mit dem Hauptbügel (3) gefertigt, während die anderen Glieder (1b, 1c) jeweils einstückig mit den anderen Bügeln des Traggestells (2) gefertigt sind
dadurch **gekennzeichnet,** daß alle Glieder ( 1a, 1b, 1c) der Windleitvorrichtung (1) jeweils prinzipiell von der dem Fahrtwind zugewandten, vorderen Kante (10) des Rückens (11) des jeweiligen Bügels (3, 4, 5) des Traggestells (2) ausgehen und sich in der Form eines Windleitprofils zuerst in Richtung auf die zu wischende Scheibe und anschließend entgegen dem Fahrtwind erstrecken und daß die mit den anderen Bügeln des Traggestells (2) verbundenen Glieder (1b, 1c) der Windleitvorrichtung (1) jeweils an den längs aus dem jeweiligen übergeordneten Bügel (3 bzw. 4) herausragenden Teil eines untergeordneten Bügels (4 bzw. 5) angeformt sind.

2. Wischblatt nach Anspruch 1, dadurch **gekennzeichnet**, daß die Trennungsstellen (9) zwischen den Gliedern (1a, 1b, 1c) der Windleitvorrichtung (1) jeweils in Höhe der Stirnseite des übergeordneten Bügels vorgesehen ist.

3. Wischblatt nach Anspruch 2, wobei die äußeren Krallenbügel (5) kein Glied der Windleitvorrichtung (1) aufweisen, dadurch **gekennzeichnet**, daß jeweils das Glied (1b) der Windleitvorrichtung (1), welches mit dem dem äußeren Krallenbügel (5) benachbarten Zwischenbügel (4) verbunden ist, eine freitragende, flügelartige Verlängerung (13) in Längsrichtung aufweist, welche die äußere Stirnseite des Zwischenbügels (4) nach auswärts überragt und sich längs des äußeren Krallenbügels (5) erstreckt.

4. Wischblatt nach einem der vorhergehenden Ansprüche, dadurch **gekennzeichnet,** daß die Trennungsstellen (9) zwischen den Gliedern (1a, 1b, 1c) der Windleitvorrichtung (1) an einem von der Stirnseite des Hauptbügels (3) bzw. des jeweils übergeordneten Bügels in Richtung zur Mitte des Traggestells (2) zurückgesetzten Ort vorgesehen sind, insbesondere in der Nähe des inneren, vom jeweils übergeordneten Bügel überdeckten Endes des untergeordneten Bügels, so daß die mit den untergeordneten Bügeln verbundenen Glieder (1b, 1c) der Windleitvorrichtung (1) eine freitragende Verlängerung (26,27) in Längsrichtung aufweisen, welche sich entlang eines Teiles der übergeordneten Bügels bis zur jeweiligen Trennungsstelle (9) erstreckt.

5. Wischblatt nach einem der vorhergehenden Ansprüche, dadurch **gekennzeichnet,** daß die jeweils untergeordneten Bügel im Bereich ihrer Anlenkstellen (12) derart stufenartig ausgebildet sind, daß sich die Außenfläche des untergeordneten Bügels im Prinzip absatzlos an die Außenfläche des übergeordneten Bügels anschließt.

6. Wischblatt nach einem der vorhergehenden Ansprüche, dadurch **gekennzeichnet,** daß der Rücken (11) des Hauptbügels (3) und gegebenfalls der Zwischenbügel (4) mit Durchbrüchen (17) versehen ist, die sich über seine gesamte Breite erstrecken und den an der Unterseite der Windleitvorrichtung (1) entlangströmenden Teil des Fahrtwindes zumindest zum größten Teil hindurchtreten lassen.

7. Wischblatt nach einem der vorhergehenden Ansprüche, dadurch **gekennzeichnet,** daß das gesamte Traggestell (2) einschließlich Windleitvorrichtung (1) und Gelenkbolzen (24), welche den Hauptbügel (3) und die anderen Bügel untereinander verbinden, aus, vorzugsweise dem gleichen, wiederverwertbarem, Kunststoffmaterial besteht.

8. Wischblatt nach Anspruch 7, dadurch **gekennzeichnet,** daß zusätzlich in den Bereichen des inneren Endes eines untergeordneten Bügels der übergeordnete Bügel im Querschnitt U-artig geformt ist und in diesen Bereichen der untergeordnete Bügel an den Innenseiten des übergeordneten Bügels seitlich geführt ist.

9. Wischblatt nach einem der vorhergehenden Ansprüche, dadurch **gekennzeichnet,** daß im Bereich des Einhängekastens (14) für das Ende des Wischarmes (20) der Raum zwischen der vorderen Seitenwand (21) des Einhängekastens (14) und der vom Fahrtwind abgewandten Rückseite der Windleitvorrichtung (1) geschlossen bzw. mit Material ausgefüllt ist.

10. Wischblatt nach einem der vorhergehenden Ansprüche, dadurch **gekennzeichnet,** daß die in den Anlenkstellen (12) in fluchtenden Bohrungen des jeweiligen übergeordneten und untergeordneten Bügels angeordneten Gelenkbolzen (24) jeweils mit dem untergeordneten Bügel drehfest verbunden und axial gesichert sind und in dem übergeordneten Bügel drehbar gelagert sind.

## Claims

1. A wiper blade for a windshield wiper device of a vehicle, especially for a motor vehicle, including the features:
- the wiper blade has a support frame (2), which is constructed in a cascade arrangement from a main bracket (3) and a number of other brackets, which are called intermediate brackets (4) or claw brackets (5) according to their functions;
- the other brackets are ordered in a hierarchy, so that a bracket closer to the main bracket (3) is superior to a bracket farther away from the main bracket (4) and the claw brackets (5) are the farthest, lowest-level brackets;
- the lower-level brackets are pivoted in the fashion of a balance beam on an end of a given superior bracket to swivel around an axis running transversely to the longitudinal direction of the support frame (2) so that hinge points (12) are formed;
- at least at the hinge points (12) the main bracket (3) and the other brackets have a U-shaped cross section and at which the superior bracket embraces the lower-level bracket;
- the main bracket (3) has a suspension box (14) in its central region which is formed for rotatable connection of the wiper blade to a free end of a wiper arm (20), preferably by way of a suitable connecting piece (19);
- a wind-directing device (1) is connected to the support frame (2) for increasing a down-force of the wiper squeegee (6) against the windshield to be wiped, the force being caused by oncoming relative wind and the wind-directing device being arranged along the longitudinal axis of the support frame (2) on a side turned toward the relative wind;
- the wind-directing device (1) is divided into several segments (1a, 1b, 1c) substantially transverse to its longitudinal axis, the segments are adapted at their dividing points in a manner that they create a wind-directing device (1) almost continual during operation of the windshield wiper device;
- a segment (1a) is manufactured in one piece with the main bracket (3) and the other segments (1b, 1c) being manufactured in one piece with other brackets of the support frame (2);
characterized in that all segments (1a, 1b, 1c) of the wind-directing device (1) develop from a forward edge (10) of a spine (11) of the associated bracket (3, 4, 5) of the support frame (2) and extend in the form of a wind-directing profile first toward the windshield to be wiped and then against the relative wind and that the segments (1b, 1c) being connected to the other brackets of the support frame (2) of the wind-directing device are adapted to the portion of a lower-level bracket (4 or 5) extending longitudinally from a higher-level bracket (3 or 4).

2. A wiper blade according to claim 1, characterized in that separation points (9) between the segments (1a, 1b, 1c) of the wind-directing device are provided at the height of the superior bracket.

3. A wiper blade according to claim 2, characterized in that outer claw brackets (5) do not have a segment of the wind-directing device (1), characterized in that in each case the segment (1b) of the wind-directing device (1) which is connected to an intermediate bracket (4) adjacent to an outer claw bracket (5), has a cantilevered, wing-like elongation (13) in the longitudinal direction, which elongation overlaps an outer front face of the intermediate bracket (4) outwardly and extends along the outer claw bracket (5).

4. A wiper blade according to one of the preceding claims, characterized in that separation points (9) are provided between the segments (1a, 1b, lc) of the wind-directing device (1) at a location recessed from a front side of the main bracket (3) or the respective superior bracket in a direction towards the center of the support frame (2), especially in the vicinity of the inner end of the lower-level bracket which is covered by the respective higher-level bracket, so that segments (1b, 1c) connected to lower-level brackets of the wind-directing device (1) have a cantilevered elongation (26, 27) in the longitudinal direction, which elongation extends along a part of the superior bracket up to a given separation point (9).

5. A wiper blade according to one of the preceding claims, characterized in that the lower-level brackets in the area of their hinge points (12) are formed by gradation in such a fashion that an outer surface of the lower-level brackets adjoins the outer surface of the respective superior bracket without interruption.

6. A wiper blade according to one of the preceding claims, characterized in that at the spine (11) of the main bracket (3) and if necessary the intermediate bracket (4) are provided with pigeonholes (17) extending across its entire width and allow passage at least of the major part of the relative wind flowing at the underside of the wind-directing device (1).

7. A wiper blade according to one of the preceding claims, characterized in that the entire support frame (2) including the wind-directing device (3) and hinge pins (24), which connect the main bracket (3) and the other bracket to each other are made of a plastic material, preferably of the same and reusable plastic.

8. A wiper blade according to claim 7, characterized in that additionally, in regions of an inner end of a lower-level bracket, the respective superior bracket is U-shaped in cross section with an inside laterally guiding the lower-level bracket.

9. A wiper blade according to one of the preceding claims, characterized in that, in the region of the suspension box (14) for the end of a wiper arm (20), the area between forward side wall (21) of the suspension box (14) and a rear side of the wind-directing device (1) turned away from the relative wind is closed or filled with material.

10. A wiper blade according to one of the preceding claims, characterized in that the hinge pins (24) mounted in the hinge points (12) in aligned holes of the given superior and lower-level brackets are in each case non-rotatably connected to a lower-level bracket and axially secured and are rotatably mounted in the superior bracket.

## Revendications

1. Balai d'essuie-glace pour un système essuie-glace de véhicule, notamment d'automobile, comprenant les caractéristiques suivantes :
- le balai d'essuie-glace comporte un cadre porteur (2) qui est constitué, en cascade, d'un étrier principal (3) et d'un certain nombre d'autres étriers qui, suivant leur fonction, sont également appelés étriers intermédiaires (4) ou étriers à crampons (5) ;
- les autres étriers sont organisés hiérarchiquement de telle sorte que l'étrier disposé plus près de l'étrier principal (3) est respectivement dominant par rapport à l'étrier disposé plus loin de l'étrier principal (3), et que les étriers les plus dépendants sont les étriers à crampons (5) ;
- les étriers dépendants sont respectivement articulés, à pivotement à la manière d'un fléau de balance autour d'un axe s'étendant transversalement à la direction longitudinale du cadre porteur (2), à une extrémité de l'étrier dominant respectif, de sorte que des points d'articulation (12) sont formés :
- au moins aux points d'articulation (12), l'étrier principal (3) et les autres étriers sont formés avec une section transversale en U et, à ces points d'articulation (12), l'étrier dominant respectif recouvre l'étrier dépendant ;
- l'étrier principal (3) possède dans sa région médiane un « boîtier d'accrochage » (14), qui est conçu pour relier à pivotement le balai d'essuie-glace à l'extrémité libre d'un bras d'essuie-glace (20), de préférence au moyen d'un adaptateur correspondant (19) ;
- un dispositif déflecteur (1) est assemblé au cadre porteur (2) afin d'augmenter la pression d'application de la lame caoutchouc (6) contre la vitre à essuyer par le vent relatif affluant, dispositif qui est disposé sur le côté longitudinal du cadre porteur (2) qui est tourné vers le vent relatif ;
- le dispositif déflecteur (1) est divisé, essentiellement transversalement à sa direction longitudinale, en plusieurs éléments (1a, 1b, 1c) qui, en leurs points de séparation (9), sont mutuellement adaptés de telle sorte qu'ils forment lors de l'utilisation du système essuie-glace un dispositif déflecteur (1) pratiquement ininterrompu,
- un élément (1a) est fabriqué d'un seul tenant avec l'étrier principal (3), tandis que les autres éléments (1b, 1c) sont respectivement fabriqués d'un seul tenant avec les autres étriers du cadre porteur (2),
**caractérisé** en ce que tous les éléments (1a, 1b, 1c) du dispositif déflecteur (1) partent en principe respectivement du bord (10) avant, tourné vers le vent relatif, du dos (11) de l'étrier respectif (3, 4, 5) du cadre porteur (2), et s'étendent sous la forme d'un profilé déflecteur d'abord en direction de la vitre à essuyer puis à l'encontre du vent relatif, et en ce que les éléments (1b, 1c) du dispositif déflecteur (1) qui sont reliés aux autres étriers du cadre porteur (2) sont respectivement formés sur la partie d'un étrier dépendant (4 ou 5) qui dépasse longitudinalement de l'étrier dominant respectif (3 ou 4).

2. Balai d'essuie-glace selon la revendication 1, **caractérisé** en ce que les points de séparation (9) entre les éléments (1a, 1b, 1c) du dispositif déflecteur (1) sont respectivement prévus à hauteur du côté frontal de l'étrier dominant.

3. Balai d'essuie-glace selon la revendication 2, les étriers à crampons extérieurs (5) ne comprenant pas d'élément du dispositif déflecteur (1), **caractérisé** en ce que l'élément (1b) respectif du dispositif déflecteur (1), qui est assemblé à l'étrier intermédiaire (4) voisin de l'étrier à crampons extérieur (5), comporte en direction longitudinale un prolongement (13) en portée libre, du genre aile, qui dépasse du côté frontal extérieur de l'étrier intermédiaire (4) vers l'extérieur et s'étend le long de l'étrier à crampons extérieur (5).

4. Balai d'essuie-glace selon l'une quelconque des revendications précédentes, **caractérisé** en ce que les points de séparation (9) entre les éléments (1a, 1b, 1c) du dispositif déflecteur (1) sont prévus en un endroit qui est en retrait par rapport au côté frontal de l'étrier principal (3) ou encore de l'étrier dominant respectif, en direction du milieu du cadre porteur (2), notamment à proximité de l'extrémité intérieure de l'étrier dépendant qui est recouverte par l'étrier dominant respectif, de sorte que les éléments (1b, 1c) du dispositif déflecteur (1) qui sont assemblés aux étriers dépendants comportent en direction longitudinale un prolongement (26, 27) en portée libre, qui s'étend le long d'une partie de l'étrier dominant jusqu'au point de séparation (9) respectif.

5. Balai d'essuie-glace selon l'une quelconque des revendications précédentes, **caractérisé** en ce que les étriers dépendants respectifs sont réalisés, dans la région de leurs points d'articulation (12), étagés de telle sorte que la surface extérieure de l'étrier dépendant se raccorde en principe sans décrochement à la surface extérieure de l'étrier dominant.

6. Balai d'essuie-glace selon l'une quelconque des revendications précédentes, **caractérisé** en ce que le dos (11) de l'étrier principal (3) et éventuellement des étriers intermédiaires (4) est pourvu d'ajours (17) qui s'étendent sur toute sa largeur et laissent passer au moins pour sa majeure partie la partie du vent relatif qui s'écoule le long du côté inférieur du dispositif déflecteur (1).

7. Balai d'essuie-glace selon l'une quelconque des revendications précédentes, **caractérisé** en ce que l'ensemble du cadre porteur (2), y compris le dispositif déflecteur (1) et les goupilles d'articulation (24) qui relient entre eux l'étrier principal (3) et les autres étriers, est constitué de préférence du même matériau plastique recyclable.

8. Balai d'essuie-glace selon la revendication 7, **caractérisé** en ce que l'étrier dominant est en outre formé avec une section en U dans les régions de l'extrémité intérieure d'un étrier dépendant, et l'étrier dépendant est, dans ces régions, guidé latéralement contre les côtés intérieurs de l'étrier dominant.

9. Balai d'essuie-glace selon l'une quelconque des revendications précédentes, **caractérisé** en ce que, dans la région du boîtier d'accrochage (14) pour l'extrémité du bras d'essuie-glace (20), l'espace entre la paroi latérale avant (21) du boîtier d'accrochage (14) et le côté arrière, opposé au vent relatif, du dispositif déflecteur (1) est fermé ou encore rempli de matériau.

10. Balai d'essuie-glace selon l'une quelconque des revendications précédentes, **caractérisé** en ce que les goupilles d'articulation (24), disposées aux points d'articulation (12) dans des perçages alignés de l'étrier dépendant et de l'étrier dominant respectif, sont respectivement liées en rotation à l'étrier dépendant et bloquées axialement, et montées à rotation dans l'étrier dominant.
